# EUROPÄISCHE PATENTANMELDUNG

(11) **EP 4 835 593 A1**
(43) Veröffentlichungstag der Anmeldung: **04.11.2026**
(21) Anmeldenummer: 25173912.4
(22) Anmeldetag: 02.05.2025
(51) Int. Cl.: G05B 19/416

(54) **REGELUNGSSYSTEM ZUR STEUERUNG BLOCKIERTER ACHSEN**

(71) Anmelder: Siemens Aktiengesellschaft, 80333 München (DE)
(72) Erfinder: Vogel, Theo, 91320 Ebermannstadt (DE); Kerling, Sebastian, 91052 Erlangen (DE)
(74) Vertreter: Siemens Patent Attorneys

(57) **Zusammenfassung**

Die Erfindung betrifft ein Regelungssystem zur Steuerung blockierter Achsen in direkter Drehmoment-, Kraft- oder Bahnzugregelung, umfassend:
- eine Kaskadenregelstruktur (100) mit einem Drehmoment-, Kraft- oder Bahnzugregler (110);
- eine Einheit zur Bestimmung der Steifigkeit des Systems (130);
- eine Drehzahlvorsteuerung (210), die konfiguriert ist, ein Drehzahlvorsteuerungssignal basierend auf einer Änderung eines Sollwerts und der bestimmten Steifigkeit des Systems zu berechnen, wobei das Drehzahlvorsteuerungssignal oberhalb einer charakteristischen Resonanz des Systems wirkt;
- eine Verspannmomentvorsteuerung (220), die konfiguriert ist, ein Verspannmomentvorsteuerungssignal zu berechnen, wo-bei das Verspannmomentvorsteuerungssignal unterhalb der charakteristischen Resonanz des Systems wirkt; wobei
- die Drehzahlvorsteuerung (210) konfiguriert ist, das Drehzahlvorsteuerungssignal durch Division der Änderung des Sollwerts durch die Steifigkeit des Systems zu berechnen; und
- entweder die Drehzahlvorsteuerung (210) oder die Verspannmomentvorsteuerung (220) oder die Verspannmomentvorsteuerung (220) und die die Drehzahlvorsteuerung (210) kombiniert angewendet werden, um die Dynamik des Führungsverhaltens über den gesamten Frequenzbereich zu verbessern.

## Beschreibung

In der industriellen Automatisierung und Antriebstechnik spielt die präzise Steuerung von blockierten Achsen eine wichtige Rolle. Herkömmliche Regelungssysteme für blockierte Achsen in direkter Drehmoment-, Kraft- oder Bahnzugregelung verwenden oft einfache Pl-Regler oder kaskadierte Regelstrukturen. Diese Ansätze können jedoch Schwierigkeiten haben, eine hohe Dynamik und Genauigkeit über den gesamten Frequenzbereich zu gewährleisten.

Bestehende Systeme können in bestimmten Frequenzbereichen gute Ergebnisse liefern, haben aber oft Schwächen in anderen Bereichen. Zum Beispiel kann ein System, das bei niedrigen Frequenzen gut funktioniert, bei höheren Frequenzen an Präzision verlieren. Umgekehrt können Systeme, die für hohe Frequenzen optimiert sind, bei niedrigen Frequenzen Probleme mit der Genauigkeit haben.

Ein weiteres Problem besteht darin, dass viele vorhandene Regelungssysteme die spezifischen mechanischen Eigenschaften des Systems, wie Steifigkeit und Resonanzfrequenzen, nicht ausreichend berücksichtigen. Dies kann zu suboptimalen Regelungsergebnissen und potenziell zu Instabilitäten führen.

Das Hauptproblem besteht darin, ein Regelungssystem zu entwickeln, das eine hohe Dynamik und Präzision über den gesamten Frequenzbereich gewährleistet und dabei die spezifischen mechanischen Eigenschaften des Systems berücksichtigt.

Die vorliegende Erfindung löst dieses Problem durch ein neu-artiges Regelungssystem, das eine Kombination aus Drehzahlvorsteuerung und Verspannmomentvorsteuerung verwendet. Die Drehzahlvorsteuerung wirkt oberhalb der charakteristischen Resonanz des Systems, während die Verspannmomentvorsteuerung unterhalb dieser Resonanz aktiv ist. Durch diese Kombination wird eine Verbesserung der Dynamik des Führungsverhaltens über den gesamten Frequenzbereich erreicht.

In einem ersten Aspekt wird ein Regelungssystem zur Steuerung blockierter Achsen in direkter Drehmoment-, Kraft- oder Bahnzugregelung bereitgestellt. Das Regelungssystem umfasst: eine Kaskadenregelstruktur mit einem Drehmoment-, Kraft- oder Bahnzugregler; eine Einheit zur Bestimmung der Steifigkeit des Systems; eine Drehzahlvorsteuerung, die konfiguriert ist, ein Drehzahlvorsteuerungssignal basierend auf einer Änderung eines Sollwerts und der bestimmten Steifigkeit des Systems zu berechnen, wobei das Drehzahlvorsteuerungssignal oberhalb einer charakteristischen Resonanz des Systems wirkt; eine Verspannmomentvorsteuerung, die konfiguriert ist, ein Verspannmomentvorsteuerungssignal zu berechnen, wobei das Verspannmomentvorsteuerungssignal unterhalb der charakteristischen Resonanz des Systems wirkt; wobei die Drehzahlvorsteuerung konfiguriert ist, das Drehzahlvorsteuerungssignal durch Division der Änderung des Sollwerts durch die Steifigkeit des Systems zu berechnen; und wobei die Drehzahlvorsteuerung und die Verspannmomentvorsteuerung kombiniert angewendet werden, um die Dynamik des Führungsverhaltens über den gesamten Frequenzbereich zu verbessern.

Im Sinne der Erfindung ist die Einheit zur Bestimmung der Steifigkeit des Systems, keine mechanische Einheit oder ein mechanisches Element im System, sondern vielmehr eine Software, wobei die Steifigkeit über eine geeignete Messung er-mittelt wird.

Dieses Regelungssystem ermöglicht eine verbesserte Dynamik des Führungsverhaltens bei blockierten Achsen in direkter Drehmoment-, Kraft- oder Bahnzugregelung. Durch die Kombination von Drehzahlvorsteuerung und Verspannmomentvorsteuerung wird eine optimale Regelung über den gesamten Frequenzbereich erreicht, was zu einer präziseren und schnelleren Reaktion des Systems führt.

Die Einheit zur Bestimmung der Steifigkeit des Systems kann konfiguriert sein, die Steifigkeit aus einem Nachgiebigkeitsfrequenzgang zu ermitteln. Dabei beschreibt der Nachgiebigkeitsfrequenzgang das dynamische Verhalten eines mechanischen Systems in Abhängigkeit von der Frequenz der einwirkenden Kräfte oder Momente. Er stellt das Verhältnis zwischen der Auslenkung (Verformung) des Systems und der einwirkenden Kraft über verschiedene Frequenzen dar. Mathematisch kann er als Kehrwert der dynamischen Steifigkeit ausgedrückt werden.

Der Nachgiebigkeitsfrequenzgang zeigt, wie "nachgiebig" oder flexibel ein System bei verschiedenen Anregungsfrequenzen ist. Er wird typischerweise durch Messung der Systemantwort auf sinusförmige Anregungen über einen Frequenzbereich ermittelt. Aus dem Nachgiebigkeitsfrequenzgang können wichtige Systemeigenschaften wie Resonanzfrequenzen, Dämpfung und statische Steifigkeit abgeleitet werden. In der Regelungstechnik hilft er bei der Auslegung von Regelparametern und der Vor-hersage des Systemverhaltens unter verschiedenen Betriebsbedingungen. Für die vorliegende Erfindung ist der Nachgiebigkeitsfrequenzgang besonders relevant, da er zur Bestimmung der Systemsteifigkeit verwendet werden kann, die für die Berechnung der Vorsteuerungssignale benötigt wird.

Zur Vermessung diese Frequenzgangs wird die Drehzahlregelstrecke der Drehmomentachse aufgezeichnet. Anschließend wird aus den Signalen der Drehzahlregelstrecke der Nachgiebigkeitsfrequenzgang berechnet. Der Nachgiebigkeitsfrequenzgang ist durch die folgende Übertragungsfunktion definiert. $GNG \left(s\right) = φist \left(s\right) / Mist \left(s\right)$

Der Eingang der Übertragungsfunktion ist der Drehmoment Ist-wert *Mist* am Motor. Der Ausgang ist die Position *φist* des Mo-tors, die aus dem integrierten Drehzahl Istwert der gemessenen Drehzahlregelstrecke berechnet wird. Bei der Berechnung der Position aus der Drehzahl des Motors muss diese vor der Integration in SI-Einheiten, also von 1/*min* in *rad*/*s* umgerechnet werden. Für eine bessere Handhabbarkeit kann für die-se Umrechnung der Drehzahlistwert in 1/*min* mit 0,1047 multipliziert werden. Das hat auf die Funktionsweise keinen relevanten Einfluss. Solange die Einheiten der Vorsteuersignale und die der Steifigkeit konsistent sind, kann man in beliebigen Einheiten rechnen.

Diese Methode zur Bestimmung der Steifigkeit ermöglicht eine genaue Anpassung der Vorsteuerungssignale an die spezifischen Eigenschaften des Systems, was zu einer verbesserten Regelungsgenauigkeit führt.

Das Regelungssystem kann ferner einen Sensor zur Erfassung eines Drehmoment-, Kraft- oder Bahnzugistwerts innerhalb einer Mechanik des Systems umfassen. Die Integration eines solchen Sensors ermöglicht eine präzise Erfassung der tatsächlichen Systemzustände, wobei die grundlegende Kaskadenstruktur eine direkte Erfassung des Kraftistwerts erfordert. Aber im Zusammenhang mit den beiden Vorsteuerung ist die Art der Istwertbildung des Kraftregler nicht relevant.

Die Verspannmomentvorsteuerung kann konfiguriert sein, das Verspannmomentvorsteuerungssignal basierend auf dem Sollwert zu berechnen. Diese direkte Berechnung des Verspannmomentvorsteuerungssignals aus dem Sollwert ermöglicht eine schnelle und präzise Anpassung des Systems an Änderungen des Sollwerts.

Die charakteristische Resonanz des Systems kann durch die Steifigkeit und eine Trägheit des Systems bestimmt werden.

Mit der Berücksichtigung der charakteristischen Resonanz kann festgelegt werden, in welchem Frequenzbereich die Verspannmomentvorsteuerung und Drehzahlvorsteuerung "wirken" und ermöglicht eine optimale Abstimmung der Vorsteuerungssignale auf die dynamischen Eigenschaften des Systems, was zu einer verbesserten Regelungsqualität führt.

Das System kann Teil eines Prüfstands sein.

Die Anwendung des Regelungssystems in einem Prüfstand ermöglicht präzise und dynamische Testbedingungen für verschiedene Komponenten und Systeme. Alternativ kann das System Teil einer Converting-Maschine sein.

Der Einsatz des Regelungssystems in Converting-Maschinen verbessert die Präzision und Effizienz von Verarbeitungsprozessen in der Fertigungsindustrie. Die Kaskadenregelstruktur kann einen unterlagerten Drehzahlregler umfassen.

Die Integration eines unterlagerten Drehzahlreglers in die Kaskadenstruktur ermöglicht eine feinere Abstimmung der Regelung und verbessert die Gesamtleistung des Systems. Die Einheit zur Bestimmung der Steifigkeit kann konfiguriert sein, die Steifigkeit durch Variation eines Drehmomentsollwerts und Aufzeichnung einer Motorlage und eines Drehmomentistwerts zu berechnen.

Diese alternative Methode zur Bestimmung der Steifigkeit bietet eine flexible Möglichkeit, die Systemeigenschaften zu er-mitteln, insbesondere wenn ein Nachgiebigkeitsfrequenzgang nicht verfügbar ist.

Das Regelungssystem kann ferner eine Filtereinheit zur Glättung des Drehzahlvorsteuerungssignals und/oder des Verspannmomentvorsteuerungssignals umfassen.

Die Verwendung einer Filtereinheit verbessert die Qualität der Vorsteuerungssignale, indem unerwünschte Störungen redu-ziert werden, was zu einem stabileren und präziseren Regel-verhalten führt.

In einem zweiten Aspekt wird eine Vorrichtung zur Steuerung blockierter Achsen in direkter Drehmoment-, Kraft- oder Bahn-zugregelung bereitgestellt, die das Regelungssystem nach einem der vorhergehenden Aspekte umfasst.

Diese Vorrichtung ermöglicht die praktische Anwendung des verbesserten Regelungssystems in verschiedenen industriellen Kontexten, was zu einer erhöhten Leistungsfähigkeit und Präzision in der Steuerung blockierter Achsen führt.

Die Vorrichtung kann ferner einen Elektromotor umfassen, der durch das Regelungssystem gesteuert wird.

Die Integration eines Elektromotors in die Vorrichtung ermöglicht die direkte Umsetzung der Regelungssignale in mechanische Bewegung, was die Effizienz und Genauigkeit des Gesamtsystems erhöht.

Die Vorrichtung kann ferner eine mechanische Übertragungseinrichtung umfassen, die mit dem Elektromotor verbunden ist.

Die Einbeziehung einer mechanischen Übertragungseinrichtung ermöglicht die Anpassung der Motorbewegung an spezifische Anwendungsanforderungen und verbessert die Flexibilität des Systems.

Die Vorrichtung kann als Prüfstand ausgebildet sein.

Die Ausbildung der Vorrichtung als Prüfstand ermöglicht hoch-präzise und dynamische Testumgebungen für verschiedene industrielle Anwendungen.

Alternativ kann die Vorrichtung als Converting-Maschine aus-gebildet sein. Die Ausbildung der Vorrichtung als Converting-Maschine ermöglicht eine verbesserte Steuerung und Effizienz in Verarbeitungs- und Umwandlungsprozessen in der Fertigungsindustrie.

Das Regelungssystem zur Steuerung blockierter Achsen in direkter Drehmoment-, Kraft- oder Bahnzugregelung findet Anwendung in verschiedenen industriellen Bereichen. Zu den typischen Einsatzgebieten gehören Converting-Anlagen, Druckmaschinen und Prüfstände. Das System eignet sich sowohl für rotatorische als auch für lineare Antriebssysteme.

In der Praxis lässt sich die Mechanik einer blockierten Achse vereinfacht als Einmassenschwinger darstellen. Dieser besteht aus der Motorträgheit bzw. Motormasse und der Steifigkeit der Mechanik. Diese Vereinfachung ermöglicht eine effektive Modellierung und Regelung des Systems.

Die Verwendung des Regelungssystems in den genannten Anwendungsbereichen ermöglicht eine präzise Steuerung von Achsen, die innerhalb ihrer jeweiligen Mechanik ein Drehmoment, eine Kraft oder eine Bahnzugkraft aufbauen. Dabei befindet sich die Messstelle zur Erfassung der entsprechenden Größe innerhalb der Mechanik.

Durch den Einsatz dieses Regelungssystems können Prozesse in der Fertigungsindustrie, insbesondere in der Papier- und Folienverarbeitung, sowie in der Druckindustrie optimiert wer-den. Zudem bietet das System Vorteile bei der Durchführung von Tests und Prüfungen in verschiedenen technischen Bereichen.

Die Einheit zur Bestimmung der Steifigkeit des Systems spielt eine zentrale Rolle in der Funktionsweise des Regelungssystems. Diese Einheit kann einen Signalprozessor und einen Speicher umfassen und ist in der Lage, die Steifigkeit des Systems durch zwei Hauptmethoden zu ermitteln:
a) Analyse des Nachgiebigkeitsfrequenzgangs: Bei dieser Methode wird ein Testsignal in das System eingespeist und die Systemantwort analysiert. Die Einheit zeichnet die Anregung und die resultierende Systemantwort auf und berechnet daraus den Nachgiebigkeitsfrequenzgang. Aus diesem Frequenzgang kann die Steifigkeit des Systems abgeleitet werden.
b) Variation des Drehmomentsollwerts: Alternativ kann die Einheit die Steifigkeit durch Variation eines Drehmomentsollwerts und gleichzeitige Aufzeichnung der Motorlage und des Drehmomentistwerts berechnen. Dabei wird der Drehmomentsollwert in einem definierten Bereich variiert und die resultierende Änderung der Motorlage sowie des Drehmomentistwerts erfasst. Aus diesen Daten kann die Steifigkeit des Systems berechnet werden.

Die Verspannmomentvorsteuerung ist ein wesentlicher Bestand-teil des Regelungssystems. Das Verspannmomentvorsteuerungs-signal wirkt unterhalb der charakteristischen Resonanz des Systems und trägt zur Verbesserung des Führungsverhaltens in diesem Frequenzbereich bei.

Die Drehzahlvorsteuerung ist ein weiterer wichtiger Bestand-teil des Regelungssystems. Sie berechnet das Drehzahlvorsteuerungssignal durch Division der Änderung des Sollwerts durch die

Steifigkeit des Systems. Diese Berechnung kann mathematisch als vff=Δw/k ausgedrückt werden, wobei vff das Drehzahlvorsteuerungssignal, Δw die Änderung des Sollwerts und k die Systemsteifigkeit ist. Das Drehzahlvorsteuerungssignal wirkt oberhalb der charakteristischen Resonanz des Systems und verbessert die Dynamik in diesem Frequenzbereich.

Das Regelungssystem umfasst zudem einen Sensor zur Erfassung eines Drehmoment-, Kraft- oder Bahnzugistwerts innerhalb der Mechanik des Systems. Dieser Sensor kann als Dehnungsmess-streifen, piezoelektrischer Sensor oder optischer Sensor ausgeführt sein und ist direkt in die Mechanik des Systems integriert. Die genaue Positionierung und Art des Sensors hängt von der spezifischen Anwendung und den zu messenden Größen ab.

Eine Filtereinheit kann ebenfalls Teil des Regelungssystems sein. Diese Einheit dient zur Glättung des Drehzahlvorsteuerungssignals und/oder des Verspannmomentvorsteuerungssignals. Die Filtereinheit kann als digitaler Tiefpassfilter implementiert sein, der hochfrequente Störungen reduziert und somit ein stabileres Regelverhalten ermöglicht. Die Filterparameter können je nach Anwendung und gewünschtem Systemverhalten angepasst werden.

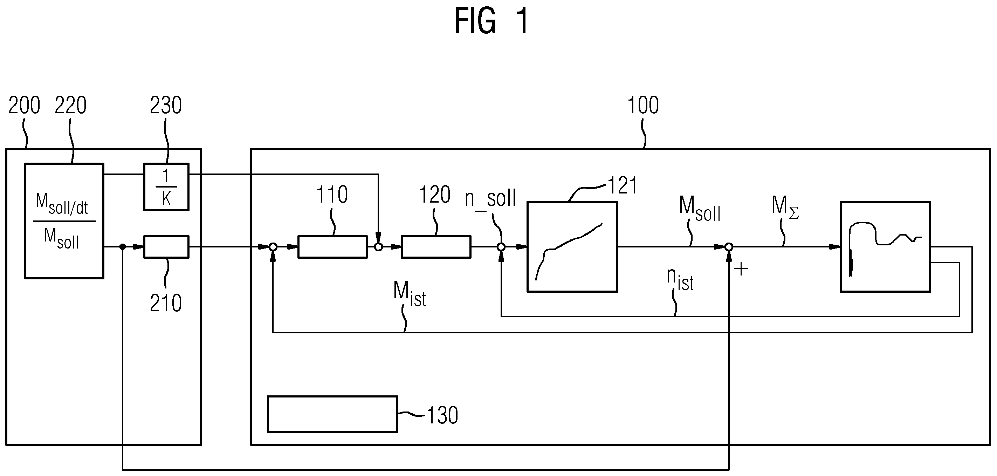

Das Regelungssystem zur Steuerung blockierter Achsen in direkter Drehmoment-, Kraft- oder Bahnzugregelung wird anhand von Figur 1 erläutert.

Die Figur 1 zeigt eine schematische Darstellung der grundlegenden Struktur des Regelungssystems. Das System umfasst eine Kaskadenregelstruktur 100, die ähnlich wie bei einer lagegeregelten Achse aufgebaut ist. In der Kaskadenregelstruktur 100 ist jedoch der Lageregler durch einen Drehmoment-, Kraft- oder Bahnzugregler 110 ersetzt. Dieser Regler verwendet einen entsprechenden Sensor innerhalb der Mechanik, um den Ist-Wert des Drehmoments, der Kraft oder der Bahnzugkraft zu erfassen und daraus eine Solldrehzahl zu berechnen.

Die Kaskadenregelstruktur 100 beinhaltet zudem einen unterlagerten Drehzahlregler. Dieser Aufbau ermöglicht eine präzise Regelung des Drehmoments, der Kraft oder der Bahnzugkraft bei blockierten Achsen.

Zusätzlich zur Kaskadenregelstruktur 100 umfasst das System eine Drehzahlvorsteuerung 230. Die Drehzahlvorsteuerung 230 berechnet ein Drehzahlvorsteuerungssignal basierend auf der Änderung eines Sollwerts und der Steifigkeit des Systems. Dieses Vorsteuerungssignal wirkt oberhalb einer charakteristischen Resonanz des Systems und trägt zur Verbesserung der Dynamik bei.

Eine weitere Komponente des Systems ist die Verspannmomentvorsteuerung 220. Diese berechnet ein Verspannmomentvorsteuerungssignal, das unterhalb der charakteristischen Resonanz des Systems wirkt. Die Verspannmomentvorsteuerung 220 ergänzt die Wirkung der Drehzahlvorsteuerung 230 in einem anderen Frequenzbereich.

Die Drehzahlvorsteuerung 230 und die Verspannmomentvorsteuerung 220 werden kombiniert angewendet. Durch diese Kombination wird die Dynamik des Führungsverhaltens über den gesamten Frequenzbereich verbessert. Die Drehzahlvorsteuerung 230 wirkt dabei oberhalb der charakteristischen Resonanz, während die Verspannmomentvorsteuerung 220 unterhalb dieser Resonanz aktiv ist.

Diese Struktur ermöglicht eine effektive Regelung von blockierten Achsen in direkter Drehmoment-, Kraft- oder Bahnzugregelung, wobei die Vorteile der verschiedenen Vorsteuerungskomponenten genutzt werden, um die Gesamtdynamik des Systems zu optimieren.

Die Kaskadenregelstruktur 100, wie in Figur 1 dargestellt, bildet das Herzstück des Regelungssystems zur Steuerung blockierter Achsen in direkter Drehmoment-, Kraft- oder Basen in direkter Drehmoment-, Kraft- oder Bahnzugregelung. Diese Struktur umfasst mehrere miteinander verbundene Regelkomponenten, die zusammenwirken, um eine präzise Steuerung zu ermöglichen.

Ein zentrales Element der Kaskadenregelstruktur 100 ist der Drehmoment-, Kraft- oder Bahnzugregler 110. Dieser Regler verarbeitet die Differenz zwischen dem Sollwert und dem Istwert des jeweiligen Sollwerts und dem Istwert des jeweiligen zu regelnden Parameters. Der Istwert wird dabei von einem Sensor erfasst, der sich innerhalb der Mechanik des Systems befindet. Basierend auf dieser Differenz generiert der Regler 110 ein Stellsignal, das als Eingangsgröße für den unterlagerten Drehzahlregler 120 dient. Der unterlagerte Drehzahlregler 120 ist eine weitere wichtige Komponente der Kaskadenregelstruktur 100. Dieser Regler empfängt das vom übergeordneten Regler 110 generierte Stellsignal als Solldrehzahl und vergleicht diese mit der tatsächlichen Motordrehzahl. In diesem Beispiel arbeitet der Drehzahlregler 120 als Drehzahlsollwert-Filter.

Die Kaskadenregelstruktur 100 kann in verschiedenen Anwendungen eingesetzt werden, beispielsweise in Prüfständen. In einer möglichen Konfiguration können zwei Motoren auf der rechten und linken Seite eines Prüfstands montiert sein. Diese Anordnung ermöglicht eine präzise Steuerung und Messung von Drehmomenten, Kräften oder Bahnzügen in verschiedenen Testszenarien.

Der in der Mechanik des Systems integrierte Sensor zur Erfassung des Drehmoment-, Kraft- oder Bahnzugistwerts spielt eine entscheidende Rolle für die Genauigkeit der Regelung. Dieser Sensor liefert kontinuierlich Messwerte an den Drehmoment-, Kraft- oder Bahnzugregler 110, wodurch eine zeitnahe Anpassung der Regelparameter ermöglicht wird.

Durch die Kombination des übergeordneten Reglers 110 mit dem unterlagerten Drehzahlregler 120 in der Kaskadenstruktur wird eine hohe Regelgüte erreicht. Der unterlagerte Drehzahlregler 120 kann schnell auf Störungen reagieren, während der übergeordnete Regler 110 für die Einhaltung des gewünschten Drehmoments, der Kraft oder des Bahnzugs sorgt. Diese Struktur ermöglicht eine effektive Kompensation von Störeinflüssen und eine präzise Regelung des Gesamtsystems.

Den Datenfluss zwischen verschiedenen Komponenten eines Regelungssystems darstellt. Die Einheit zur Bestimmung der Steifigkeit des Systems ist als Block 130 dargestellt. Diese Einheit spielt eine wichtige Rolle bei der Optimierung der Regelungsparameter.

Die Einheit zur Bestimmung der Steifigkeit kann die Steifigkeit 130 des Systems auf verschiedene Arten ermitteln. Eine Möglichkeit besteht darin, die Steifigkeit 130 aus einem Nachgiebigkeitsfrequenzgang zu bestimmen. Alternativ kann die Steifigkeit 130 auch durch Variation eines Drehmomentsollwerts und Aufzeichnung einer Motorlage sowie eines Drehmomentistwerts berechnet werden.

Die charakteristische Resonanz des Systems wird durch die er-mittelte Steifigkeit 130 und eine Trägheit des Systems bestimmt. Diese Informationen sind entscheidend für die Optimierung der Regelungsparameter.

Es ist zu beachten, dass die Steifigkeit des Systems nicht-linear sein kann. In solchen Fällen kann eine Steifigkeits-kennlinie für die Drehzahlvorsteuerung hinterlegt werden.

Das Drehzahlvorsteuerungssignal kann auf verschiedenen Ebenen des Regelungssystems berechnet und vorgegeben werden. Die genaue Ebene, auf der dies geschieht, kann je nach spezifischer Implementierung und Anforderungen des Systems variieren.

Durch diesen Optimierungsprozess und den Datenaustausch zwischen den Komponenten wird eine effektive Anpassung der Regelungsparameter ermöglicht, was zu einer verbesserten Leistung des Gesamtsystems führt.

Die Drehzahlvorsteuerung und die Verspannmomentvorsteuerung arbeiten zusammen, um die Dynamik des Führungsverhaltens über den gesamten Frequenzbereich zu verbessern.

Die Drehzahlvorsteuerung berechnet ein Drehzahlvorsteuerungs-signal basierend auf der Änderung des Sollwerts und der Steifigkeit des Systems. Dazu wird die Änderung des Sollwerts durch die Steifigkeit des Systems dividiert . Dieses Vorgehen ermöglicht eine präzise Anpassung der Drehzahl an Sollwertänderungen unter Berücksichtigung der mechanischen Eigenschaften des Systems.

Die Verspannmomentvorsteuerung berechnet ein Verspannmomentvorsteuerungssignal basierend auf dem Sollwert. Dieses Signal wirkt unterhalb der charakteristischen Resonanz des Systems und sorgt für eine stationäre Genauigkeit in diesem Frequenzbereich.

Die beschriebene Kombination aus Drehzahlvorsteuerung und Verspannmomentvorsteuerung ermöglicht eine präzise und dynamische Regelung blockierter Achsen in direkter Drehmoment-, Kraft- oder Bahnzugregelung über einen weiten Frequenzbereich.

Das Regelungssystem zur Steuerung blockierter Achsen in direkter Drehmoment-, Kraft- oder Bahnzugregelung kann in verschiedenen industriellen Anwendungen eingesetzt werden. Eine mögliche Anwendung ist der Einsatz in Prüfständen. In einem Prüfstand kann das Regelungssystem verwendet werden, um präzise Drehmoment- oder Kraftprofile zu erzeugen und zu regeln. Dies ermöglicht die genaue Simulation von Belastungen und die Durchführung von Dauertests an verschiedenen mechanischen Komponenten.

Eine weitere Anwendungsmöglichkeit besteht in Converting-Maschinen. In diesen Maschinen, die beispielsweise zur Verarbeitung von Papier, Kunststofffolien oder Textilien eingesetzt werden, kann das Regelungssystem zur präzisen Steuerung der Bahnspannung verwendet werden. Die Kombination aus Drehzahlvorsteuerung und Verspannmomentvorsteuerung ermöglicht eine hohe Dynamik bei gleichzeitiger Genauigkeit über den gesamten Frequenzbereich, was für die Qualität des Endprodukts von Bedeutung sein kann.

Das Regelungssystem kann als Teil einer Vorrichtung zur Steuerung blockierter Achsen implementiert werden. Eine solche Vorrichtung kann einen Elektromotor umfassen, der durch das Regelungssystem gesteuert wird. Der Elektromotor kann dabei direkt oder über eine mechanische Übertragungseinrichtung mit der zu steuernden Achse verbunden sein. Die mechanische Übertragungseinrichtung kann beispielsweise Getriebe, Riemen oder Kupplungen umfassen, um die Motorbewegung auf die Achse zu übertragen.

Für unterschiedliche industrielle Anforderungen können Vari-anten und Anpassungen des Regelungssystems vorgenommen wer-den. In Anwendungen mit besonders hohen Anforderungen an die Dynamik kann die Filtereinheit zur Glättung der Vorsteuerungssignale angepasst werden, um einen optimalen Kompromiss zwischen Reaktionsschnelligkeit und Signalqualität zu erreichen.

Bei Systemen mit nichtlinearer Steifigkeit kann die Einheit zur Bestimmung der Steifigkeit erweitert werden, um eine Kennlinie der Steifigkeit zu hinterlegen und zu berücksichtigen. Dies ermöglicht eine präzisere Berechnung der Vorsteuerungssignale über den gesamten Arbeitsbereich.

In Anwendungen mit stark variierenden Lasten oder Trägheits-momenten kann eine adaptive Anpassung der Regelparameter implementiert werden. Hierbei können die Parameter des Drehmoment-, Kraft- oder Bahnzugreglers sowie die Vorsteuerungsparameter in Abhängigkeit von den aktuellen Betriebsbedingungen automatisch angepasst werden.

Für Systeme mit mehreren gekoppelten Achsen, wie sie in komplexen Converting-Maschinen vorkommen können, kann das Regelungssystem um eine Koordination zwischen den einzelnen Achsen erweitert werden. Dies ermöglicht eine synchronisierte Steuerung mehrerer Achsen, um beispielsweise eine gleichmäßige Bahnspannung über die gesamte Maschinenbreite zu gewährleisten.

In Prüfstandsanwendungen kann das Regelungssystem um zusätzliche Funktionen zur automatisierten Durchführung von Testsequenzen erweitert werden. Dies kann die Programmierung von Lastprofilen, die Aufzeichnung von Messdaten und die automatische Auswertung von Testergebnissen umfassen.

Durch diese Anpassungsmöglichkeiten kann das Regelungssystem flexibel an verschiedene industrielle Anforderungen angepasst werden und in einem breiten Spektrum von Anwendungen eingesetzt werden.

Es ist zu verstehen, dass der Begriff "blockierte Achse" eine Achse bezeichnet, die innerhalb ihrer jeweiligen Mechanik ein Drehmoment, eine Kraft oder eine Bahnzugkraft aufbaut, ohne sich dabei frei zu drehen.

Der Ausdruck "charakteristische Resonanz" bezieht sich auf die Eigenfrequenz des Systems, bei der es zu einer maximalen Schwingungsamplitude kommt. Diese wird durch die Steifigkeit und die Trägheit des Systems bestimmt. "Charakteristische Resonanz" kann auch als "Eigenresonanz", "natürliche Resonanzfrequenz" oder "Resonanzfrequenz des Systems" bezeichnet werden.

Unter "Kaskadenregelstruktur" versteht man eine hierarchische Anordnung von Regelkreisen, bei der der Ausgang eines übergeordneten Reglers als Sollwert für einen untergeordneten Regler dient. In diesem Zusammenhang kann "Kaskadenregelstruktur" auch als "kaskadierte Regelung", "Kaskadenregelung" oder "mehrstufige Regelstruktur" bezeichnet werden.

Der Begriff "Verspannmomentvorsteuerung" beschreibt eine Regelungstechnik, bei der ein Vorsteuerungssignal basierend auf dem Sollwert berechnet wird, um das System unterhalb der charakteristischen Resonanz zu stabilisieren. "Verspannmomentvorsteuerung" kann auch als "Vorspannungsmomentvorsteuerung" oder "Vorspannungskraftvorsteuerung" bezeichnet werden.

## Patentansprüche

1. Regelungssystem zur Steuerung blockierter Achsen in direkter Drehmoment-, Kraft- oder Bahnzugregelung, umfassend:
- eine Kaskadenregelstruktur (100) mit einem Drehmoment-, Kraft- oder Bahnzugregler (110);
- eine Einheit zur Bestimmung der Steifigkeit des Systems (130);
- eine Drehzahlvorsteuerung (210), die konfiguriert ist, ein Drehzahlvorsteuerungssignal basierend auf einer Änderung eines Sollwerts und der bestimmten Steifigkeit des Systems zu berechnen, wobei das Drehzahlvorsteuerungssignal oberhalb einer charakteristischen Resonanz des Systems wirkt;
- eine Verspannmomentvorsteuerung (220), die konfiguriert ist, ein Verspannmomentvorsteuerungssignal zu berechnen, wo-bei das Verspannmomentvorsteuerungssignal unterhalb der charakteristischen Resonanz des Systems wirkt;
**dadurch gekennzeichnet, dass**
- die Drehzahlvorsteuerung (210) konfiguriert ist, das Drehzahlvorsteuerungssignal durch Division der Änderung des Sollwerts durch die Steifigkeit des Systems zu berechnen; und
- entweder die Drehzahlvorsteuerung (210) oder die Verspannmomentvorsteuerung (220) oder die Verspannmomentvorsteuerung (220) und die die Drehzahlvorsteuerung (210) kombiniert angewendet werden, um die Dynamik des Führungsverhaltens über den gesamten Frequenzbereich zu verbessern.

2. Regelungssystem nach Anspruch 1, wobei die Einheit zur Bestimmung der Steifigkeit (130) konfiguriert ist, die Steifigkeit aus einem Nachgiebigkeitsfrequenzgang zu ermitteln.

3. Regelungssystem nach Anspruch 1 oder 2, ferner umfassend einen Sensor zur Erfassung eines Drehmoment-, Kraft- oder Bahnzugistwerts innerhalb einer Mechanik des Systems.

4. Regelungssystem nach einem der vorhergehenden Ansprüche, wobei die Verspannmomentvorsteuerung (220) konfiguriert ist, das Verspannmomentvorsteuerungssignal basierend auf dem Sollwert zu berechnen.

5. Regelungssystem nach einem der vorhergehenden Ansprüche, wobei die charakteristische Resonanz des Systems durch die Steifigkeit und eine Trägheit des Systems bestimmt wird.

6. Regelungssystem nach einem der vorhergehenden Ansprüche, wobei das System Teil eines Prüfstands ist.

7. Regelungssystem nach einem der Ansprüche 1 bis 5, wo-bei das System Teil einer Converting-Maschine ist.

8. Regelungssystem nach einem der vorhergehenden Ansprüche, wobei die Kaskadenregelstruktur (100) einen unterlagerten Drehzahlregler (120) umfasst.

9. Regelungssystem nach einem der vorhergehenden Ansprüche, wobei die Einheit zur Bestimmung der Steifigkeit (130) konfiguriert ist, die Steifigkeit durch Variation eines Drehmomentsollwerts und Aufzeichnung einer Motorlage und eines Drehmomentistwerts zu berechnen.

10. Regelungssystem nach einem der vorhergehenden Ansprüche, ferner umfassend eine Filtereinheit zur Glättung des Drehzahlvorsteuerungssignals und/oder des Verspannmomentvorsteuerungssignals.

11. Vorrichtung zur Steuerung blockierter Achsen in direkter Drehmoment-, Kraft- oder Bahnzugregelung, umfassend das Regelungssystem nach einem der Ansprüche 1 bis 10.

12. Vorrichtung nach Anspruch 11, ferner umfassend einen Elektromotor, der durch das Regelungssystem gesteuert wird.

13. Vorrichtung nach Anspruch 11 oder 12, ferner umfassend eine mechanische Übertragungseinrichtung, die mit dem Elektromotor verbunden ist.

14. Vorrichtung nach einem der Ansprüche 11 bis 13, wobei die Vorrichtung als Prüfstand ausgebildet ist.

15. Vorrichtung nach einem der Ansprüche 11 bis 13, wobei die Vorrichtung als Converting-Maschine ausgebildet ist.
